# EUROPEAN PATENT SPECIFICATION

(11) **EP 2 383 436 B1**
(45) Date of publication and mention of the grant of the patent: **07.11.2018**
(21) Application number: 11163874.8
(22) Date of filing: 27.04.2011
(51) Int. Cl.: F01D 5/18

(54) **Airfoil trailing edge and method of manufacturing the same**
Schaufelprofil-Hinterkante und Herstellungsverfahren
Bord de fuite d'une aube et procédé de fabrication associé

(30) Priority: 30.04.2010 US 770924
(43) Date of publication of application: 02.11.2011
(73) Proprietor: General Electric Company, Schenectady, NY 12345 (US)
(72) Inventor: Bunker, Ronald Scott, Niskayuna, NY 12309 (US)
(74) Representative: Fischer, Michael Maria

(56) References cited:
- US-B2- 7 371 048

## Description

### BACKGROUND

The invention relates generally to an airfoil trailing edge, and more particularly, to a cooled turbine airfoil having a thin trailing edge.

Commonly, in a non-limiting example a cooled airfoil turbine includes a leading edge and a trailing edge. Hot fluids on an exterior airfoil surface of the turbine, combined with aggressive high fluid velocities at the trailing edge, lead to high heat fluxes when the material temperatures are limited to reasonable values. The heating of the trailing edge leads to deterioration and shorter life of the trailing edge. Different approaches were employed in the past to reduce the heating of the trailing edge. A typical example of one such approach is to increase a thickness of the trailing edge, thereby allowing internal cooling of the trailing edge to reduce the deterioration of the trailing edge due to the applied heat flux. However, it is generally known that the thickness of the trailing edge is inversely proportional to the aerodynamic efficiency of the airfoil. Therefore, increasing the thickness of the trailing edge adversely affects the efficiency of the airfoil.

In contrast, reducing the thickness of the trailing edge may result in rapid deterioration of the trailing edge. Some airfoils employ a cooling system to provide cooling to the trailing edge. One such approach is airfoil pressure side bleed slots where an aft portion of the airfoil pressure side is formed as a series of slots with intermediate lands during formation of the airfoil via a casting process. The bleed slots are connected to internal cooling channels and provide a cooling fluid at the trailing edge. The cooling fluid reduces the temperature of the heated trailing edge. However, the cooling effectiveness typically decreases beyond the point of good durability. This results in undesirable costs and inefficiency of the airfoil. Therefore, obtaining a thin trailing edge with sufficient cooling over the trailing edge still is a challenge. US 7 371 048 B relates to a turbine blade trailing edge construction, and discloses the preamble of claims 1 and 3. Therefore, there is a need for an improved airfoil to address the aforementioned issues.

### BRIEF DESCRIPTION

In accordance with the invention, an airfoil according to claim 1 is provided. The airfoil includes a leading edge; a trailing edge; a suction side and a pressure side. The airfoil also includes an internal cooling cavity configured to convey a cooling fluid. The airfoil further includes a plurality of internal cooling channels disposed along a span of the airfoil and configured to supply the cooling fluid from the cooling cavity towards the trailing edge; wherein a section of the pressure side proximate to the trailing edge of the airfoil is removed to expose a portion of the plurality of internal cooling channels proximate to the trailing edge of the airfoil.

In accordance with the invention, a method for machining an airfoil including a plurality of internal cooling channels according to claim 3 is provided. The method includes selectively removing a pressure side section proximate to a trailing edge of the airfoil to expose a portion of the plurality of internal cooling channels proximate to the trailing edge of the airfoil.

Preferred embodiments are defined in the dependent claims.

### DRAWINGS

These and other features, aspects, and advantages of the present invention will become better understood when the following detailed description is read with reference to the accompanying drawings in which like characters represent like parts throughout the drawings, wherein
FIG. 1 is a schematic representation of a conventional turbine engine.
FIG. 2 is a schematic representation of the conventional airfoil of the high pressure turbine of FIG. 1.
FIG. 3 is a schematic illustration of a cross sectional view of a trailing edge of the conventional airfoil of FIG. 2 depicting a pressure side lip thickness and a bleed slot.
FIG. 4 is a schematic representation of a trailing edge of the conventional airfoil of FIG. 2 depicting the section of an exemplary polygonal shape to be selectively removed from the pressure side section proximate to the trailing edge of the airfoil in accordance with an embodiment of the invention.
FIG. 5 is a schematic representation of the trailing edge of FIG. 4 depicting an exposed portion of the plurality of internal cooling channels subsequent to the selective removal of a pressure side section proximate to the trailing edge.
FIG. 6 is a schematic representation of a cross sectional front view of an exposed portion of the plurality of internal cooling channels of FIG. 5 proximate to the trailing edge of the airfoil in accordance with an embodiment of the invention.
FIG. 7 is a schematic illustration of the trailing edge of FIG. 5 depicting diffusers formed via machining the exposed portion of the plurality of internal cooling channels of FIG. 5 to a predefined shape in accordance with an embodiment of the invention.
FIG. 8 is a schematic representation of a cross sectional front view of the diffusers of FIG. 7 formed via machining the exposed portion of the plurality of internal cooling channels of FIG. 5 to a predefined shape in accordance with an embodiment of the invention.
FIG. 9 is a flow chart representing the steps involved in the method of machining of the airfoil to form diffusers in accordance with an embodiment of the invention.

### DETAILED DESCRIPTION

As discussed in detail below, embodiments of the present invention include an airfoil and a method for machining the airfoil. The airfoil includes a plurality of internal cooling channels having an exposed portion proximate to a trailing edge of the airfoil. The portion of the plurality of internal cooling channels is exposed via selectively removing a section of a pressure side of the airfoil proximate to the trailing edge. The exposed portion of the plurality of internal cooling channels is further machined to a predefined shape.

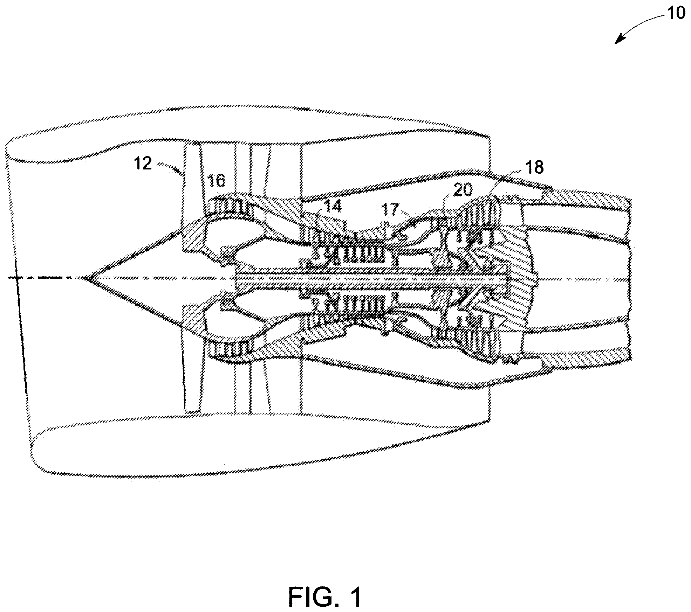

Generally, a hot fluid on an exterior airfoil surface of the airfoil, combined with aggressive high fluid velocities at the trailing edge, leads to high heat fluxes when the material temperatures are limited to reasonable values. Higher material temperatures of the trailing edge lead to a deterioration and higher maintenance cost of the airfoil. Furthermore, there is a limitation on reducing the thickness of the trailing edge due to current manufacturing constraints, such as those associated with investment casting processes. In addition, it is commonly known that the thickness of the trailing edge is inversely proportional to the aerodynamic efficiency of the airfoil. Therefore, the limitation on reducing the thickness of the trailing edge adversely affects the efficiency of the airfoil. Therefore, a novel airfoil with desired reduction in thickness of the trailing edge and a method to manufacture the same is described below with reference to FIG. 1-6.

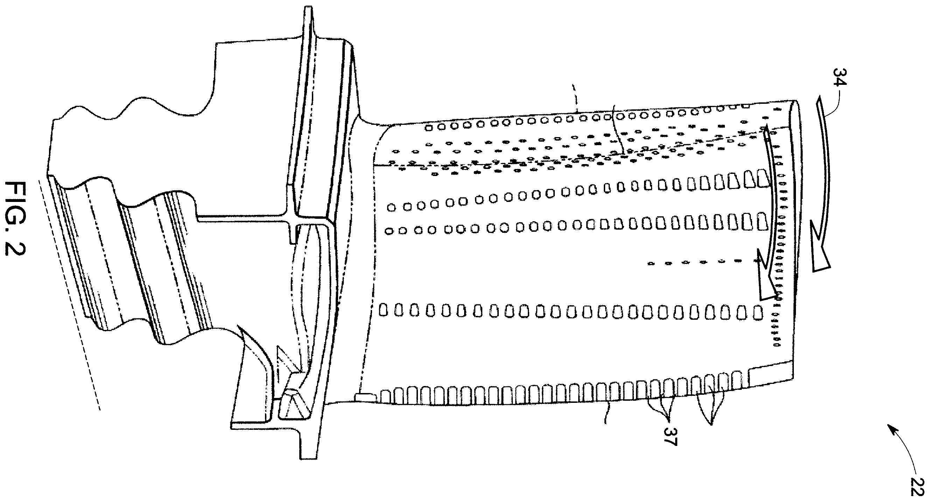

FIG. 1 is a schematic representation of a conventional turbine engine 10. The turbine engine 10 includes, in serial flow communication, a front fan 12, a multistage high-pressure compressor 14, a multistage low-pressure compressor 16, a combustor 17, a multistage low-pressure turbine 18 and a high-pressure turbine 20. In operation of turbine engine 10, air flows downstream through the front fan 12 to the multistage low pressure compressor 16. The air is compressed and continues to flow downstream through high pressure compressor 14 where the air becomes highly pressurized. A portion of the highly pressurized compressed air is directed to combustor 17, is mixed with fuel and is ignited to generate hot highly pressurized propulsive gases, which gases flow further downstream and are utilized by high pressure turbine 20 to drive high pressure compressor 14. The hot, highly pressurized propulsive gases expand and lose some of their energy and continue to flow further downstream. The gases are utilized by multistage low pressure turbine 18 to drive front fan 12 and the multistage low pressure compressor 16. The high pressure turbine 20 includes a plurality of airfoils 22 (FIG. 2). The airfoil 22 is described in greater detail with reference to FIG. 2. It should be noted herein that even though the airfoil is discussed with reference to the turbine engine, the airfoil is applicable to any other applications such as cooled vanes or nozzles in which heating of the trailing edge needs to be controlled are also envisaged.

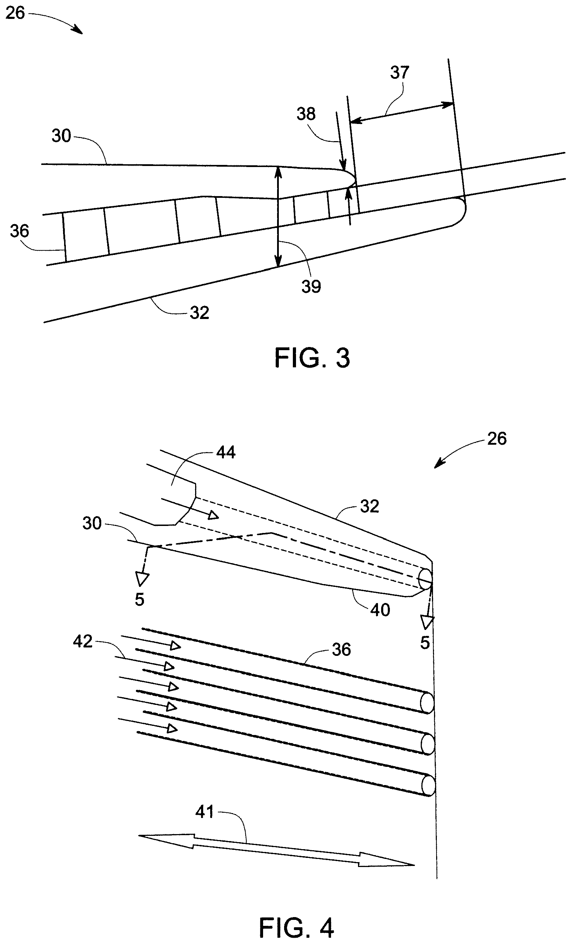

FIG. 2 is a schematic representation of the conventional airfoil 22 of the high-pressure turbine 20 of FIG. 1. The airfoil 22 includes a leading edge 24 and a trailing edge 26 that provide a lift and direction to a flow of a fluid. It should be noted herein that a first edge of the airfoil 22 to contact the incoming gases is referred to as the "leading edge" 24 and a second edge that contacts the gas as the gas flows past the airfoil 22 is referred to as "the trailing edge" 26. In an embodiment of the invention, the airfoil 22 is formed via an investment casting process. In another embodiment, the airfoil 22 may include but not limited to blades, buckets, vanes and nozzles. In operation, the hot highly pressurized propulsive gases flow over the high-pressure turbine 20 (FIG. 1) and rotate the airfoil 22. A face of the airfoil 22 subjected to higher pressure is referred to as a "pressure side" 30 while a face subjected to a "lower pressure" is referred to as a "suction side" 32. The hot highly pressurized propulsive gases flow generally in a direction 34 from the leading edge 24 towards the trailing edge 26 over both sides of the airfoil. As the gases flow past the airfoil 22, the gases flow faster over a longer side than a shorter side. The faster moving gas stream has a lower pressure than a slower moving gas stream. This pressure difference creates a force in the direction of the suction side 32 of the airfoil 22. This force is referred to as a "lift." The flow of the hot highly pressurized propulsive gases in the direction 34 results in heating of the trailing edge 26. A plurality of internal cooling channels (shown in subsequent Figs 3, 4, 5) is provided to reduce the temperature of the trailing edge 26. Furthermore, bleed slots 37 are formed at an end of the plurality of internal cooling channels proximate to the trailing edge 26.

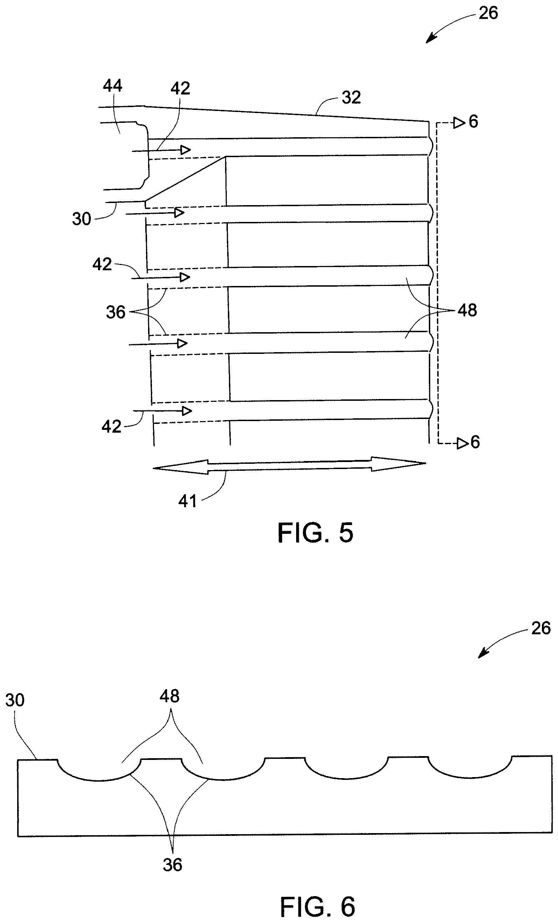

FIG. 3 is a schematic illustration of a cross sectional view of a trailing edge 26 of the conventional airfoil of FIG. 2 depicting a pressure side lip thickness 38 and the bleed slot 37. As discussed above, the aerodynamic efficiency of the airfoil 22 (FIG. 2) increases with the decrease in a trailing edge thickness 39. It is desired to further reduce the trailing edge thickness 39 to increase the efficiency of the airfoil 22. Furthermore, it is commonly known that the lip thickness 38 of the airfoil 22 is inversely proportional to the efficiency of the airfoil 22. It should be noted herein that a lip may be referred to as an edge of the pressure side 30 towards the trailing edge 26. Therefore, it is desirable to reduce the lip thickness 38 to increase the efficiency of the airfoil 22. The method and system to reduce the trailing edge thickness 39 and the lip thickness 38 is described in great detail with respect to FIG. 5 to FIG. 9 below.

FIG. 4 is a schematic representation of the trailing edge 26 of the conventional airfoil 22 of FIG. 2 depicting a section 40 of an exemplary polygonal shape to be selectively removed from the pressure side 30 proximate to the trailing edge 26 of the airfoil 22 (FIG. 2). Typically, a cooling system is provided in the airfoil 22 to cool the trailing edge 26 during operation. The plurality of internal cooling channels 36 are disposed along a span 41 of the airfoil 22 to supply a cooling fluid 42 from a cooling cavity 44 towards the trailing edge 26 within the airfoil 22 to reduce the temperature of the trailing edge 26. In an embodiment of the invention, the plurality of internal cooling channels 36 are formed via an investment casting process, an electrical discharge machining, hereinafter referred to as "EDM", electrochemical machining, hereinafter referred to as "ECM", milling, or a combination thereof. In another embodiment, the plurality of internal cooling channels 36 have a racetrack, elliptical or a circular cross section. The ability of the cooling fluid 42 to control the heating of the trailing edge 26 is directly related to the thickness, geometry, and manufacturing of the trailing edge 26. The thickness 39 can be reduced by selectively removing the pressure side section 40 proximate to the trailing edge 26. The trailing edge 26 with a selectively removed pressure side section 40 is described in detail below.

FIG. 5 is a schematic representation of the trailing edge of FIG. 4 depicting an exposed portion 48 of the plurality of internal cooling channels 36 subsequent to the selective removal of a pressure side section 40 (identified by 5-5 cut line in FIG. 4) proximate to the trailing edge 26 in accordance with an embodiment of the invention. The pressure side section 40 proximate to the trailing edge 26 of the airfoil 22 (FIG. 2) is selectively removed by electrical discharge machining, electrochemical machining, milling, abrasive water jet machining, laser micromachining or a combination thereof. In an exemplary embodiment, the selective removal of the pressure side section 40 results in about forty percent decrease in the trailing edge thickness 39 of the trailing edge 26. In an embodiment, the lip thickness 38 is less than or equal to a height of the plurality of internal cooling channels 36. In another embodiment, selectively removing the section 40 includes removing the section 40 of a generally polygonal cross section. As used herein, the term "generally polygonal section" includes a section of any geometrical shape such as for example any shape with curved edges. In a particular embodiment, the selective removal of the pressure side section 40 may also include removing a portion of the trailing edge 26 of the airfoil 22. To better understand the shape of the exposed portion 48 proximate to the trailing edge 26, a front view of the exposed portion 48 (identified by 6-6 cut line) is described in Fig. 6 below.

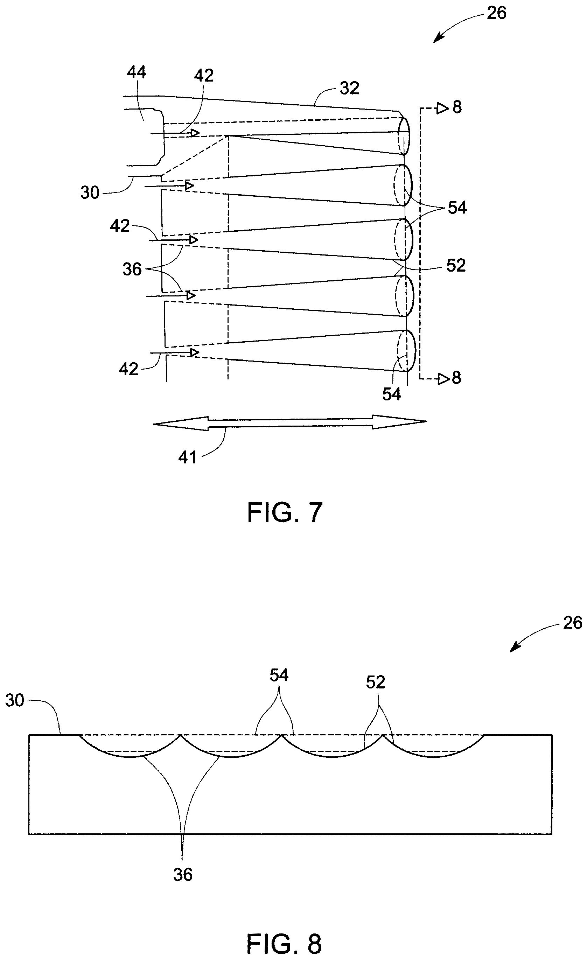

FIG. 6 is a schematic representation of a cross sectional front view of the exposed portion 48 of the plurality of internal cooling channels 36 of FIG. 5 proximate to the trailing edge 26 of the airfoil 22 (FIG. 2) in accordance with an embodiment of the invention. The exposed portion 48 of the plurality of internal cooling channels 36 includes a semicircular shape or a semi oval shape. The exposed portion 48 of the plurality of internal cooling channels 36 is machined to a predefined shape via one or more of the aforementioned methods. The predefined shape of the exposed portion 48 will be described in detail with reference to Fig. 7.

Fig. 7 is a schematic illustration of the trailing edge 26 of FIG. 5 depicting diffusers 52 formed via machining the exposed portion 48 of the plurality of internal cooling channels 36 of FIG. 5 to a predefined shape in accordance with an embodiment of the invention. In an embodiment, machining the exposed portion 48 (FIG. 5) to the predefined shape includes shaping the exposed portion 48 of the plurality of internal cooling channels 36 to form a plurality of diffusers 52. A surface area of the exposed portion 48 of the plurality of internal cooling channels 36 is increased to form the diffusers 52. The surface area of the exposed portion 48 is increased by increasing the width of the exposed portion 48 along the length of the exposed portion 48 with a wider portion at the end of the trailing edge 26.

Furthermore, the diffusers 52 form a channeled film 54 of the cooling fluid 40 on the exposed portion 48 of the plurality of internal cooling channels 36 proximate to the trailing edge 26. The channeled film 54 can be better understood with respect to FIG. 8 below. To better understand the shape of the diffusers 52 and the formation of channeled film 54, a front view of the diffusers 52 (identified by 8-8 cut line) is described in Fig. 8 below.

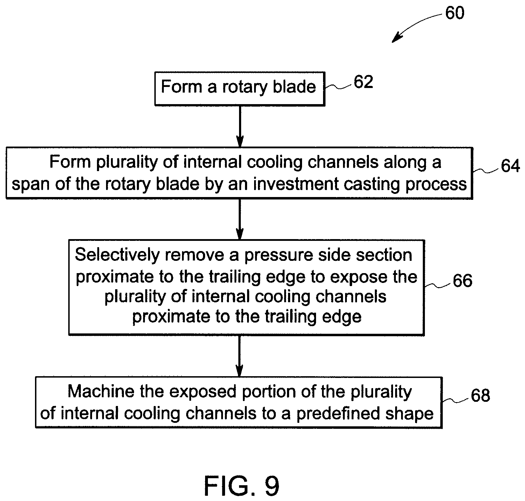

FIG. 8 is a schematic representation of a cross sectional front view of the diffusers 52 of FIG. 7 formed via machining the exposed portion 48 (FIG. 5) of the plurality of internal cooling channels 36 of FIG. 5 to a predefined shape in accordance with an embodiment of the invention. According to the invention, the diffusers 52 include a bowl shape. The increased surface area of the exposed portion 48 results in the channeled film 54 covering a wider surface area of the trailing edge 26 for cooling compared to a film formed via conventional internal cooling channels. The channeled film 54 of the cooling fluid 40 (FIG. 7) at the trailing edge 26 reduces a temperature of the trailing edge 26 and provides a cooling effect to the trailing edge 26 of the airfoil 22 (FIG. 2). To better understand the machining of the airfoil 22 to form diffusers 52, a flowchart including the steps for machining the airfoil 22 in FIG. 9 is discussed below in detail.

FIG. 9 is a flow chart representing the steps involved in the machining of the airfoil to form diffusers in accordance with an embodiment of the invention. The method includes forming an airfoil via casting process in step 62. The airfoil is machined to form a plurality of internal channels along the span of the airfoil in step 64. In an exemplary embodiment, the plurality of internal cooling channels is formed via one or more of the aforementioned methods. A pressure side section proximate to the trailing edge is selectively removed to expose the plurality of internal channels in step 66. The exposed portion of the plurality of internal cooling channels is machined to a predefined shape in step 68. In a particular embodiment, the plurality of internal cooling channels is formed via one or more of the aforementioned methods.

The various embodiments of an airfoil described above provide a airfoil including a trailing edge with reduced thickness and the plurality of internal cooling channels exposed proximate to the trailing edge to form diffusers. The thickness of the trailing edge is reduced by selectively removing a section from the pressure side proximate to the trailing edge. The selective removal of the section exposes a portion of the plurality of internal cooling channels proximate to the trailing edge. The exposed portion is machined to form diffusers via increasing the surface area of the exposed portion of the plurality of internal cooling channels. The diffusers form a channeled film at the trailing edge for cooling the trailing edge having the reduced thickness during operation and retain the coolant at a surface of the trailing edge while also spreading the coolant over a greater surface area for higher overall cooling efficiency. Thus, these techniques provide an adequately cooled thin trailing edge resulting in about a forty percent thinner trailing edge, an increased efficiency of the airfoil and low maintenance costs of the airfoil.

Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

Furthermore, the skilled artisan will recognize the interchangeability of various features from different embodiments. For example, shaping the exposed portion of the plurality of internal cooling channels to form diffusers with respect to one embodiment can be adapted for use with selectively removing a pressure side section of a generally polygonal shape. Similarly, the various features described, as well as other known equivalents for each feature, may be mixed and matched by one of ordinary skill in this art to construct additional systems and techniques in accordance with principles of this disclosure.

While only certain features of the invention have been illustrated and described herein, many modifications and changes will occur to those skilled in the art. It is, therefore, to be understood that the appended claims are intended to cover all such modifications and changes as fall within the scope of the claims.

## Claims

1. An airfoil (22) comprising:
a leading edge (24);
a trailing edge (26);
a suction side (32),
a pressure side (30),
at least one internal cooling cavity (44) configured to convey a cooling fluid (42); and
a plurality of internal cooling channels (36) disposed along a span (41) of the airfoil (22) and configured to supply the cooling fluid (42) from the cooling cavity (44) towards the trailing edge (26);
wherein a section (40) of the pressure side (30) proximate to the trailing edge (26) of the airfoil (22) is removed to expose a portion (48) of the plurality of internal cooling channels (36) proximate to the trailing edge (26) of the airfoil (22);
**characterized in that** the exposed portion (48) of the plurality of internal cooling channels (36) proximate the trailing edge (26) of the airfoil comprises diffusers (52) including a bowl shape, the diffusers (52) having a semicircular or a semi oval cross-sectional shape and having an increasing width along the length of the exposed portion (48) towards the trailing edge (26).

2. The airfoil (22) of claim 1, wherein the removed section (40) of the pressure side (30) comprises a generally polygonal cross section.

3. A method for machining an airfoil (22) comprising a plurality of internal cooling channels (36), the method comprising:
selectively removing a pressure side section (40) proximate to a trailing edge (26) of the airfoil (22) to expose a portion (48) of the plurality of internal cooling channels (36) proximate to the trailing edge (26) of the airfoil (22);
**characterized in that** the method further comprises machining the exposed portion (48) of the plurality of internal cooling channels (36) to form diffusers (52) including a bowl shape, the diffusers (52) having a semicircular or a semi oval cross-sectional shape and having an increasing width along the length of the exposed portion (48) towards the trailing edge (26).

4. The method of claim 3, wherein selectively removing the pressure side section (40) proximate to the trailing edge (26) of the airfoil (22) comprises removing the pressure side (30) section by electrical discharge machining (EDM), laser micro machining, electrochemical machining (ECM), abrasive water jet machining, milling or combinations thereof.

## Patentansprüche

1. Tragfläche (22) umfassend:
eine Vorderkante (24);
eine Hinterkante (26);
eine Saugseite (32),
eine Druckseite (30),
mindestens einen inneren Kühlhohlraum (44), der konfiguriert ist, um eine Kühlflüssigkeit (42) zu fördern; und
eine Vielzahl von inneren Kühlkanälen (36), die entlang einer Spannweite (41) der Tragfläche (22) angeordnet sind und konfiguriert sind, um die Kühlflüssigkeit (42) von dem Kühlhohlraum (44) auf die Hinterkante (26) zu liefern;
wobei ein Abschnitt (40) der Druckseite (30) benachbart der Hinterkante (26) der Tragfläche (22) entfernt wird, um einen Abschnitt (48) der Vielzahl von inneren Kühlkanälen (36) benachbart der Hinterkante (26) der Tragfläche (22) freizulegen;
**dadurch gekennzeichnet, dass** der freigelegte Abschnitt (48) der Vielzahl von inneren Kühlkanälen (36) benachbart der Hinterkante (26) der Tragfläche Diffusoren (52) beinhaltend eine Schalengestalt umfasst, die Diffusoren (52) mit einer halbkreisförmigen oder halbovalen Querschnittsgestalt und mit einer sich erhöhenden Breite entlang der Länge des freigelegten Abschnitts (48) auf die Hinterkante (26).

2. Tragfläche (22) nach Anspruch 1, wobei der entfernte Abschnitt (40) der Druckseite (30) einen im Allgemeinen polygonalen Querschnitt umfasst.

3. Verfahren zur Bearbeitung einer Tragfläche (22) umfassend eine Vielzahl von inneren Kühlkanälen (36), das Verfahren umfassend:
wahlweise Entfernung eines Druckseitenabschnitts (40) benachbart einer Hinterkante (26) der Tragfläche (22), um einen Abschnitt (48) der Vielzahl von inneren Kühlkanälen (36) benachbart der Hinterkante (26) der Tragfläche (22) freizulegen;
**dadurch gekennzeichnet, dass** das Verfahren weiter die Bearbeitung des freigelegten Abschnitts (48) der Vielzahl von inneren Kühlkanälen (36) umfasst, um Diffusoren (52) beinhaltend eine Schalengestalt zu bilden, die Diffusoren (52) mit einer halbkreisförmigen oder halbovalen Querschnittsgestalt und mit einer sich erhöhenden Breite entlang der Länge des freigelegten Abschnitts (48) auf die Hinterkante (26).

4. Verfahren nach Anspruch 3, wobei die wahlweise Entfernung des Druckseitenabschnitts (40) benachbart der Hinterkante (26) der Tragfläche (22) die Entfernung des Druckseitenabschnitts (30) durch elektrische Entladungsbearbeitung (EDM), Laser-Mikrobearbeitung, elektrochemische Bearbeitung (ECM), abrasive Wasserstrahlbearbeitung, Fräsung oder Kombinationen davon umfasst.

## Revendications

1. Profil aérodynamique (22) comprenant :
un bord d'attaque (24) ;
un bord de fuite (26) ;
un côté aspiration (32),
un côté pression (30),
au moins une cavité de refroidissement interne (44) configurée pour transporter un fluide de refroidissement (42) ; et
une pluralité de canaux de refroidissement internes (36) disposés le long d'une envergure (41) du profil aérodynamique (22) et configurés pour alimenter en fluide de refroidissement (42) de la cavité de refroidissement (44) vers le bord de fuite (26) ;
dans lequel une section (40) du côté pression (30) à proximité du bord de fuite (26) du profil aérodynamique (22) est retirée pour exposer une portion (48) de la pluralité de canaux de refroidissement internes (36) à proximité du bord de fuite (26) du profil aérodynamique (22) ;
**caractérisée en ce que** la portion exposée (48) de la pluralité de canaux de refroidissement internes (36) à proximité du bord de fuite (26) de l'aube comprend des diffuseurs (52) incluant une forme de bol, les diffuseurs (52) présentant une forme de section transversale semi-circulaire ou semi-ovale et présentant une largeur croissante le long de la longueur de la portion exposée (48) vers le bord de fuite (26).

2. Profil aérodynamique (22) selon la revendication 1, dans laquelle la section retirée (40) du côté de pression (30) comprend une section transversale généralement polygonale.

3. Procédé d'usinage d'un profil aérodynamique (22) comprenant une pluralité de canaux de refroidissement internes (36), le procédé comprenant :
le retrait sélectif d'une section côté pression (40) à proximité d'un bord de fuite (26) du profil aérodynamique (22) pour exposer une portion (48) de la pluralité de canaux de refroidissement internes (36) à proximité du bord de fuite (26) du profil aérodynamique (22) ;
**caractérisé en ce que** le procédé comprend en outre l'usinage de la portion exposée (48) de la pluralité de canaux de refroidissement internes (36) pour former des diffuseurs (52) incluant une forme de bol, les diffuseurs (52) présentant une forme de section transversale semi-circulaire ou semi-ovale et présentant une largeur croissante le long de la longueur de la portion exposée (48) vers le bord de fuite (26).

4. Procédé selon la revendication 3, dans lequel le retrait sélectif de la section côté pression (40) à proximité du bord de fuite (26) du profil aérodynamique (22) comprend le retrait de la section côté pression (30) par usinage de décharge électrique (EDM), usinage microlaser, usinage électrochimique (ECM), usinage par jet d'eau abrasif, fraisage ou des combinaisons de ceux-ci.
